(19) Europäisches Patentamt
European Patent Office
Office européen des brevets

(11) **EP 2 077 561 A1**

(12) **EUROPEAN PATENT APPLICATION**

(43) Date of publication:
   **08.07.2009 Bulletin 2009/28**

(51) Int Cl.:
   **G21C 17/00** *(2006.01)*    **G21D 3/04** *(2006.01)*

(21) Application number: **08100001.0**

(22) Date of filing: **01.01.2008**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK RS**

(71) Applicant: **Institute of Nuclear Energy Research Atomic Energy Council, Executive Yuan Taoyuan County 32546 (TW)**

(72) Inventor: **Chiu, Yang-Kai**
   **Institut of Nuclear Energy Research**
   **32546 Lontan Township, Taoyuan County (TW)**

(74) Representative: **Lang, Christian**
   **LangRaible GbR**
   **Patent- und Rechtsanwälte**
   **Herzog-Wilhelm-Straße 22**
   **80331 München (DE)**

(54) **Thermal limit analysis with hot-channel model for boiling water reactors**

(57)    An analytical method for the initial flux and transient hot water flow parameters for a boiling water reactor with single fuel bundle. First, power plant simulation software-RETRAN is used as analytical tool to set up two modes to calculate intial flux and transient hot water flow parameter based on single fuel bundle. Then, it uses supplier provided CPR (Critical Power Ratio) correlation to calculate transient CPR. An automatic program written by another Fortan language combines with upstream power plant system mode established by RETRAN program to calculate the whole reactor core for hot water parameters as boundary condition. Iteration is used to figure out DCPR (Delta Critical Power Ratio). The obtained limit transient (such as feedwater failure, steam shutoff and load abandon et al.) is selected as the maximum from DCPR. The transeint DCPR combines Safety Limit Minimum Critical Power Ratio (SLMCPR) and safety margin to figure out the MCPR (Operating Limit Minimum Critical Power Ratio, OLMCPR). Both the plant layout and operational thermal limit are based on OLMCPR. Following this, it will calculate sufficeint safety margin to assure the safety of reactor core with thermal limit.

F I G . 3

**Description**

**Background of the Invention**

**1. Field of the Invention**

The invention is related to a transient event analytical method for calculation of safe thermal limit for a boiling water reactor. Especially, it refers to a simulation method for single fuel bundle. The objectives of calculation are two: the first is to calibrate and calculate the highest inlet flux for fuel bundle for transient initial (at time zero) reactor core power and the second is to combine transient thermal flow parameters for Retran power plant system mode and hot channel initial flux calculation for DCPR iteration.

**2. Description of the Prior Art**

Before replacement of nuclear fuel after each cycle of operation in a nuclear power plant, it is necessary to complete the safety calculation for the next operation cycle. The calculation includes thermal limit and pressure limit. Because in a boiling water reactor core, there are usually hundreds of fuel bundles with independent channels, the analysis is to seek the hottest fuel bundle and calculate its transient CPR variation. There are two important steps of calculation in the process: the first is to calculate the transient initial flux for hot channel; although the fuel top and inlet are connected and have the same pressure drop, each channel has different flux due to different thermal power for every fuel bundle; it is necessary to have a mode to determine the initial flux for hot channel; the second is to calculate the flux in a transient process; the original calculation is based on reactor core flux variation from a system mode with proportionality between assumption and hot channel flux and use the boundary condition for initial flux in hot channel for iteration for MCPR variation.

For the first part, in the early time the calculation of fuel channel flux in a reactor core usually is determined by reactor core sub-channel program like ISCORE (GE), XCOBRA (AREVA), COBRA-III C (Taipower/Institute of Nuclear Energy Research) or hot water mode from the core neutron cross-section calculation program SIMULATE (Spain Iberinco). Each channel flux is determined by inlet connected and outlet connected parallel independent multiple channel mode. The original methodology by Taipower and Institute of Nuclear Energy Research was MIT-developed COBRA-III C program modified with bypass mode and established with fuel independent channel in ¼ core to calculate the steady state initial flux for each channel. This was also a parallel independent and multiple channel modes. But after fuel suppliers put some short fuel rods in the new fuel bundle and change the flow channel area, COBRA-III C program cannot simulate this phenomenon.

For the calculation of water flow parameters for transient heat in the second part, every BWR fuel supplier and every research organization use system simulation program to simulate the overall transient response of a power plant and hot water flow parameter variation at each node, like GE uses ODYN, AREVA uses COTRANSA2, Iberinco uses RETRAN, Taipower/Institute of Nuclear Energy Research use RETRAN program of current version RETRAN-3D MOD4.1. The transient event for reactor core is to use single fuel bundle mode to adopt the mode calculated variation for transient hot water flow parameters at inlet and outlet nodes. The parameters adopted by each company are a little different. They include total power variation for transient fuel bundle, transient axial power variation, and inlet cooling water enthalpy, outlet pressure and transient inlet cooling water flow variation. The parameters are provided according to the methodology adopted. For example, AREVA uses core flow variation by system transient program and hot channel initial flux to determine flux variation in hot channel. The COBRA hot channel model used by Taipower/Institute of Nuclear Energy Research in the past also adopted the same method. Iberinco uses pressures at core inlet and bypass channel as boundary condition and determines the variation in transient flux in hot channel with hot channel power.

In the first part to determine the hot channel flux, the whole or ¼ reactor core mode needs to include bypass channel, which flux ratio depends on inlet and outlet pressure, core bottom plate, fuel bottom plate gap and gap between the fuel bottom plate and fuel bundle and flow resistance coefficient that are obtained from fuel suppliers and converted to input format for analytical mode; SIMULATE program has different flow resistance coefficient mode than that provided by common fuel suppliers, so when it is in use, an additional numerical approximation is needed.

In the second part for hot channel transient analysis, if the flux variation of the system transient mode is used, the implied assumption is the ratio of hot channel flux to the average flux is constant in the transient process. If the inlet outlet pressure for fuel bundle is used as boundary condition, the transient hot channel flux is more consistent with the actual condition.

**Summary of the Invention**

The main objective for the invention is to provide an analytical method for the hot channel initial flux and transient thermal flow parameters for a boiling water reactor and reduce the calculation time. After verification, it is proved with validity.

To achieve the above objective, the invention that provides an analytical method for the hot channel initial flux and transient thermal flow parameters for a boiling water reactor first establishes the hot channel model for a single fuel bundle in RETRAN program for nuclear power plant safety analysis. The axial pressure distribution from the analytical mode by fuel suppliers is used to calibrate each flow resistance coefficient (Form Loss Coefficient). Depending on different operation conditions, two modes are established, 100% power/105% flux and 40% power/50% flux. Transient mode is determined by selecting approximated operation condition. The mode is then used to determine the initial flux for reactor core hot channel fuel bundle at different power and following transient hot water flow parameters. For the calculation for transient hot water flow parameters, the previous hot channel model established on corresponding axial pressure distribution is used with another Fortran program to handle the calculation for the transient thermal flow parameters by RETRAN system transient mode. Also through iteration for power increase to determine transient MCPR, the transient minimum MCPR converges to 1.0. Finally, the maximum DCPR value of all transient values is recorded. The sum of this maximum DCPR and SLMCPR is OLMCPR, which is the basis for power plant layout design and operation thermal limit.

The unique feature for the invention is to use single fuel bundle mode to calculate transient hot water flow parameters.

## Brief Description of the Drawings

Figure 1 is the basic process flow diagram for the invention.
Figure 2 is an illustration for the methodology for the transient analysis for the invention.
Figure 3 is the process flow diagram for the methodology for the transient analysis for the invention.
Figure 4 is the node diagram for the RETRAN single fuel bundle.
Figure 5 is an illustration for inlet flux vs. fuel bundle power in the invention.
Figure 6 is the node diagram for transient analysis mode for the RETRAN system in 2$^{nd}$ nuclear power plant in the invention.
Figure 7 is the fuel bundle power vs. inlet flux for No. 2 reactor at cycle 18 with 100% power/105% flux in 2$^{nd}$ nuclear power plant in the invention.
Figure 8 is the fuel bundle power vs. inlet flux for No. 2 reactor at cycle 18 with 40% power/50% flux in 2$^{nd}$ nuclear power plant in the invention.

## Detailed Description of the Preferred Embodiment

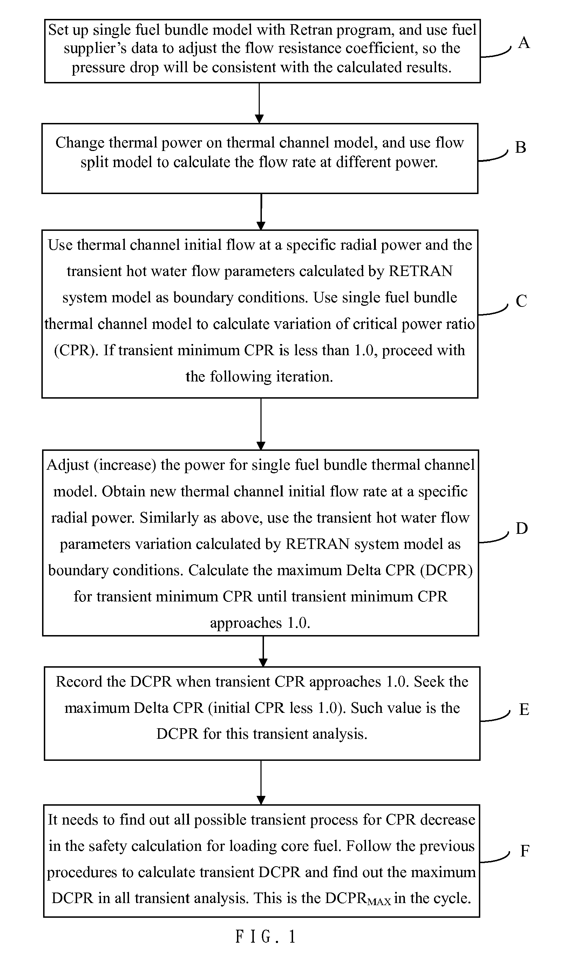

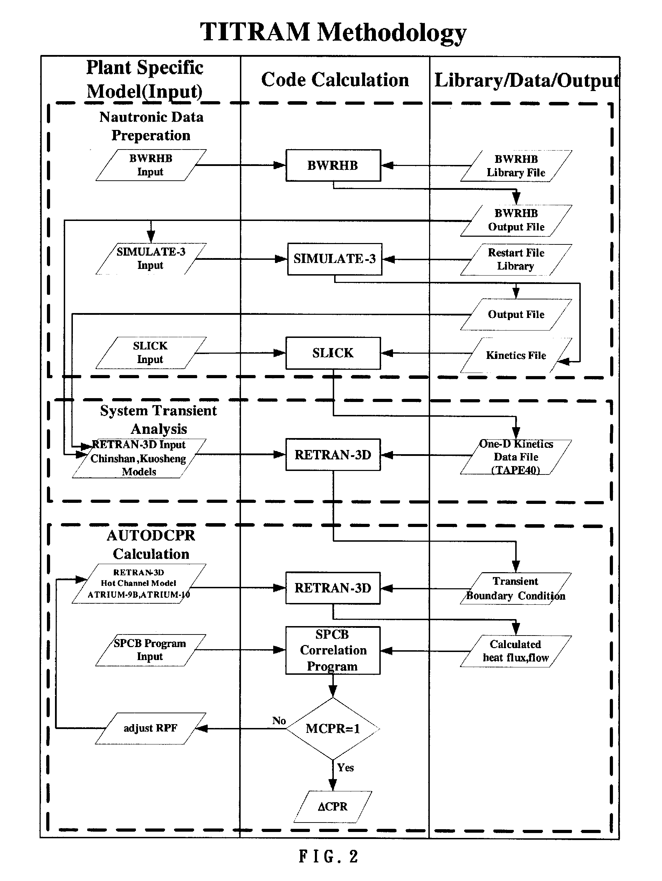

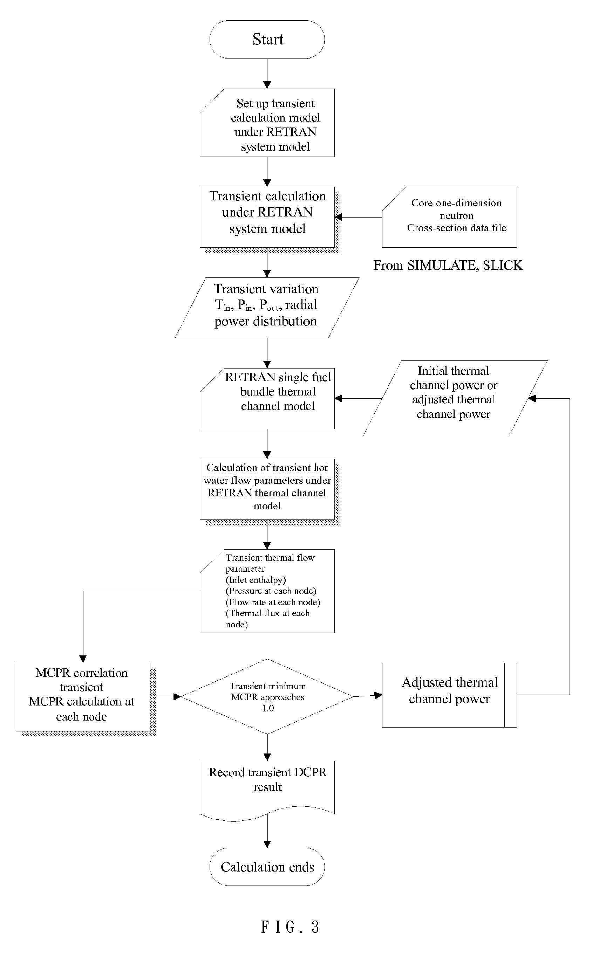

Please refer to Figure 1 for the basic process flow diagram for the invention. As shown in the figure, the invention is an analytical method for the thermal limit in a transient event regarding fuel refill in a boiling water reactor. To prevent the transient event during operation of a boiling water reactor to cause fuel to reach thermal limit and hazard, it is necessary to analyze the fuel transient event prior to operation. The transient heat limit analysis needs to find out the fuel transient event for transition boiling to occur and proceeds with analysis on the above situations. For the selection method for transient event, the Standard Review Plan (NUREG-0800) has already classified the possible transient events. After assessment by the reactor and fuel designing companies in the Final Safety Analysis Report (FSAR), the following calculation of thermal limit in the fuel refill safety analysis only selects the three transient events that reduce MCPR most in the process. The analytical method in the invention is to establish a hot channel model for single fuel bundle for pre-selected fuel bundle. It also uses automatic program to adopt the boundary conditions for hot water flow parameters calculated by nuclear power plant system transient calculation mode, and calculates transient DCPR, and reduce calculation time and human errors. The calculation process for transient DCPR is shown in Figure 2, including calculation for core center and interface, and hot channel iteration. Figure 3 is the detailed process for the automatic program AUTODCPR to calculate transient DCPR. The main step in the invention is the AUTODCPR hot channel model in Figure 3. The procedure to set up hot channel for a single fuel bundle includes calibration and transient calculation steps, as shown in Figure 1.

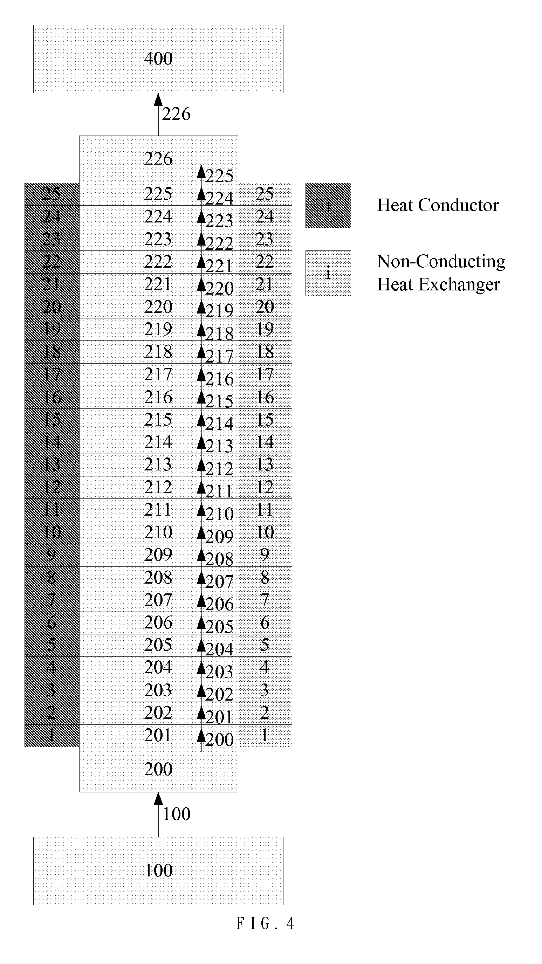

Step a: Set up single fuel bundle mode with Retran program as in Figure 4, and use fuel supplier's data to adjust the flow resistance coefficient, so the pressure drop will be consistent with the calculated results. Since the pressure drop coefficient from the fuel suppliers has been verified by experimental data, but we do not obtain experimental data when setting up the single fuel bundle mode, the pressure drop is a function of Reynold number, and expressed as follows:

$$\mathrm{k} = \mathrm{A} + \mathrm{B} \times R\, \mathrm{e}^{-C}$$

In which A, B and C are constant. In this stage, RETRAN program cannot note Reynold numbers to figure out pressure drop coefficient. So in this hot channel model, the simulated value of pressure drop same to supplier's calculated value is substituted.

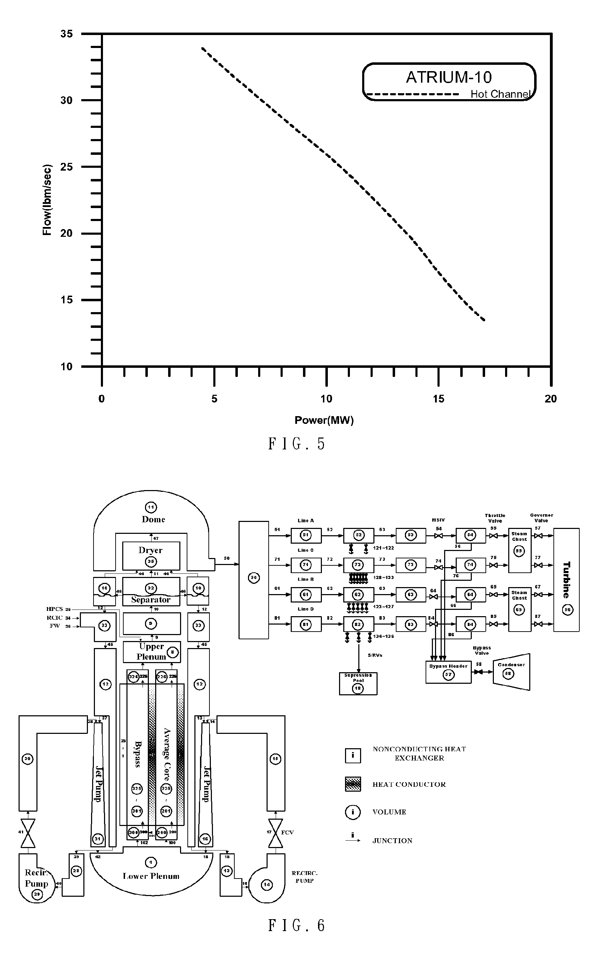

Step b: To satisfy different operation condition, set up two modes in 100% power/105% flux and 40% power/ 50% flux. Under the fixed pressure drop, increasing fuel bundle power will increase bi-phase flow zone. Under the same inlet and outlet pressure drop, increasing power will decrease hot channel flux, as shown in Figure 5. The relationship between the power and flux will be used in AUTODCPR iteration in Figure 3.

Step c: Set up power plant system mode in RETRAN program and conduct transient simulation. Take the node diagram for 2nd Nuclear Power Plant in Figure 6 as example, to calculate the response of system loop to transient event. Use RETRAN system mode to enter assumed transient conditions for calculation and record key transient parameters for reactor core, like inlet temperature, inlet pressure, outlet pressure and axial power as boundary conditions for hot channel model for a single fuel bundle. Also calculate critical power ratio CPR at each transient time point.

Step d: If minimum transient CPR has not reached 1.0, the following criteria, $10^{-4}$, is used to determine convergence.

$$\left| Min\left[CPR(t)\right] - 1.0 \right| \leqq 1.0 \times 10^{-4}$$

If there is no convergence, adjust hot channel model power until the minimum CPR reached 1.0. The adjustment is as follows:

$$RPF_{\mathrm{new}} = RPF_{old} \times \left\{1 + 0.8 \times \left(Min\left[CPR(\mathrm{t})\right] - 1\right)\right\}$$

Step e: The maximum variation DCPR is the transient initial (time at 0 second) CPR less 1.0.

Step f: Take 2nd nuclear power plant (Kuosheng Plant, KS) as example. The table 1 shows examples of transient calculation for each cycle, including different operation power, flux and fuel consumption. Find out the maximum transient DCPR at each operation condition to combine safety limit minimum critical power ratio SLMCPR and safety margin to calculate operation limit OLMCPR. Both power plant layout design and operational thermal limit are based on OLMCPR. In this way, it will find out sufficient safety margin to assure reactor core safety.

Table 1

| KS1 | Transient | KS2 | Transient |
|---|---|---|---|
| C16 | FWCF100100 | C16 | FWCF100105 |
| | FWCF100105 | | TTNB4050 |
| | LRNB100100 | | TTNB40105 |
| | PRDSF100100 | | TTNB100105 |
| | PRDSF100105 | | |
| | TTNB2550 | | |
| | TTNB2570 | | |
| | TTNB4050 | | |
| | TTNB10075 | | |
| | TTNB40105 | | |
| | TTNB70105 | | |
| | TTNB100100 | | |
| | TTNB100105 | | |
| | TTWO40105 | | |

(continued)

| KS1 | Transient | KS2 | Transient |
|---|---|---|---|
| C17 | FWCF100105<br>TTNB4050<br>TTNB40105<br>TTNB100105 | C17 | FWCF40105<br>FWCF70105<br>FWCF100105<br>TTNB4075<br>TTNB70105<br>TTNB100105<br>TTW02550<br>TTW02560<br>TTWO4050<br>TTWO40105 |
| C18 | FWCF40105<br>FWCF70105<br>FWCF100105<br>TTNB4075<br>TTNB70105<br>TTNB100105<br>TTW02550<br>TTW02560<br>TTW02570<br>TTW04050<br>TTW040105 | C18 | FWCF40105<br>FWCF70105<br>FWCF100105_X12903.8<br>TTNB40105_X12903.8<br>TTNB70105_X12903.8<br>TTNB100105<br>TTW02550<br>TTWO2550_X5200.0<br>TTW02570<br>TTWO2570_X0.0<br>TTW04050<br>TTWO40105 |
| C19 | FWCF40105_X13375.6<br>FWCF70105_X13375.6<br>FWCF100105_X13375.6<br>TTNB4075_X13375.6<br>TTNB40105_X13375.6<br>TTNB70105_X13375.6<br>TTNB100105_X13375.6<br>TTWO2550_X0.0<br>TTWO2560_X0.0<br>TTWO4050_X1300.0<br>TTWO40105_X0.0 | C19 | FWCF40105_X14008.1<br>FWCF70105_X14008.1<br>FWCF100105_X14008.1<br>LRNB4075_X14008.1<br>LRNB70105_X14008.1<br>LRNB100105_X14008.1<br>LRWO2550_X0.0<br>LRWO2560_X6600.0<br>LRWO4050_X0.0<br>LRWO40105_X0.0<br>TTNB4075_X14008.1<br>TTNB70105_X14008.1<br>TTNB100105_X14008.1<br>TTWO2550_X0.0<br>TTWO2560_X6600.0<br>TTWO4050_X0.0<br>TTWO40105_X0.0 |

Referring to the following embodiments for detailed implementation conditions:

[ Embodiment 1 ] The analytical method in the invention is applied to transient DCPR calculation for a reactor core that has 100% power/105% flux, feedwater control failure and no bypass.

Please refer to Figures 1, 2 and 3 for the basic process flow diagram for transient DCPR, the establishment of RETRAN hot channel model by Step a as explained in Figure 4, the effect of hot channel radial power ratio variation on fuel inlet flux for the RETRAN hot channel model for a reactor core under 100% power/105% flux as shown in Figure 5 and set by Step b in Embodiment 1, and node diagram for 2nd nuclear power plant in Step c in Embodiment 1. For the process flow diagram for the Step d in Embodiment 1, please refer to figure 3.

As shown in the figure: the embodiment conducted event analysis for No. 2 reactor in 2nd Nuclear Power Plant with feedwater control failure and no bypass. The reactor core operation condition is 100% power/ 105% flux. The reactor core for 2nd Nuclear Power Plant has 624 fuel bundles. In this cycle, all the reactor fuel is ATRIUM-10 from AREVA Company. The DCPR analytical method for the invention is only on the hottest channel in reactor core and consists at least the following steps:

Step a: Use RETRAN program to set up single fuel bundle and system analytical mode, including the following steps:

11. Collect fuel geometric data to establish the single fuel bundle mode as shown in Figure 4. The mode divides the fuel channel into 25 nodes. Above and below the fuel there adds one node for each to correspond to system simulation mode. Nodes 100 and 400 are time-dependent control variables. There is space for accepting system-calculated variables. 25 fuel nodes have their corresponding thermal conductors to input fuel power and power distribution. Between nodes, there is connection and simulation lattice.
12. Use plant geometry data and control logics to set up the basic RETRAN power plant system mode. As in Figure 6 there are 412 nodes in the basic mode to simulate hot water flow in a power plant. They have been calibrated by starting up the plant operation.

From Step 11 and 12, simulation can be conducted for transient hot water parameters for the single fuel bundle in the reactor core.

Step b: Transient simulation follows standard inspection process NRUG-0800 and conditions based on supplier's conservative assumption are entered into the basic mode in RETRAN system. The assumptions for feedwater failure and no bypass are as follows:

- Neutron analysis and calculation uses Licensing Base to consume until the End of Cycle (EOC). For power distribution, peak power is at the top of reactor core.
- The demand signal for feedwater controller increases within 0.1 second to 1305 of the maximum demand.
- During transient period, feedwater temperature is constant.
- High water level signal makes steam control valve and steam stop valve immediately shut off. There is a delay of 0.1 second. It simultaneously causes no delay for feedwater pump shut-off. For reactor shut-off, there is 0.07 second of delay for protection.
- Stop valve is shut linearly. Shutting time from full openness to full closure is 0.1 second. Control valve has 0.15 second as shutting time.
- When stop valve opens 90%, recirculation pump starts with 0.14 second delay.
- Control rod system has 0.14 second delay from emergency stop signal to actual start.
- Control rod is inserted at constant insertion speed. It takes 2.147 seconds for complete insertion (including 0.1 second of delay).
- Steam bypass valve does not open.
- The delay for opening steam relief valve is 0.4 second. It is 0.15 second from full openness to full closure.
- Signal reset time for steam relief valve is 0.4 second. It is 0.15 second from full openness to full closure.

Step c: Use single fuel bundle RETRAN mode to establish the relationship between fuel bundle power ratio and the inlet flux under such analytical condition. The detailed procedure at least includes:

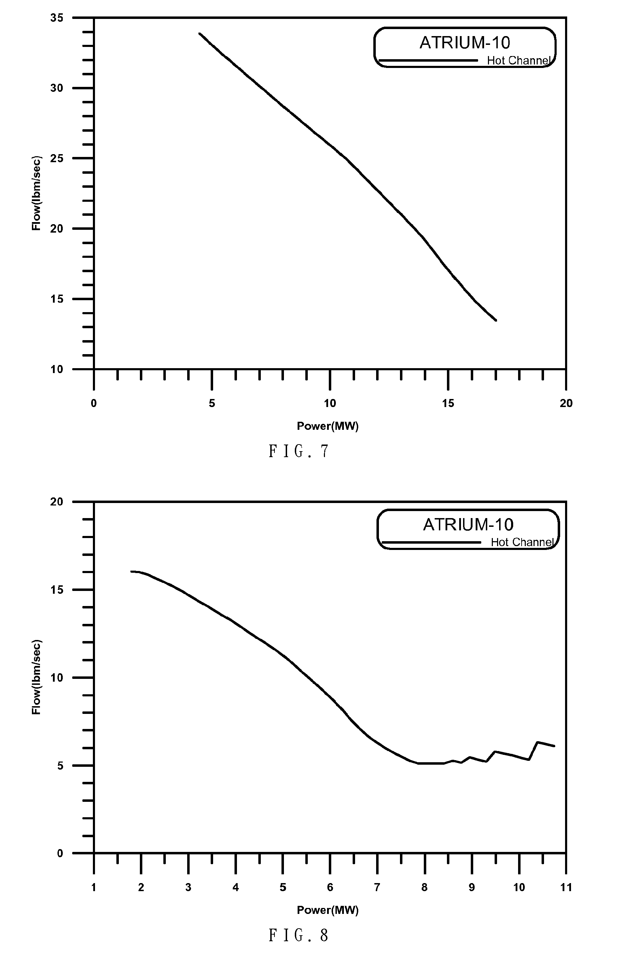

21. Use single fuel bundle RETRAN mode as basis. Under the operation condition 100% power/105% flux, use supplier's pressure distribution data to adjust RETRAN single fuel bundle mode, so the two have the consistent pressure at nodes and fixed flow resistance coefficient.
22. Use the single fuel bundle mode after adjustment of flow resistance coefficient as basis, change the flux corresponding to the recorded fuel bundle power, as shown in Figure 7.

Step d: Use Fortran language to write interface and data processing program AutoDCPR. The flow diagram for programming is shown in Figure 3. AutoDCPR program will automatically execute the following steps:

31. Read transient hot water parameters from RETRAN system mode, such as inlet temperature, inlet pressure, outlet pressure and axial power as boundary conditions for single fuel bundle hot channel model.
32. Calculate transient MCPR for a single channel RETRAN mode.
33. Follow the method described in Step d to adjust the power for single channel RETRAN mode.
34. Re-calculate transient MCPR for a single channel RETRAN mode. Repeat until the minimum transient MCPR equals 1.0.

35. Record the transient initial MCPR. After subtracting the minimum transient MCPR (1.0), it becomes the DCPR for the present transient event.

Through the above method to search for possible transient events, fuel operation needs to have the minimum MCPR value, i.e. the plant operated at 100% power /105% flux maintains reactor core MCPR higher than DCPR+1.0 to assure feedwater failure and no bypass. It is impossible for MCPR lower than 1.0 and for transient boiling situation, which would increase fuel protector temperature and break it, and then make radioactive fission products released into cooling water system.

The DCPR for the fuel bundle ATRIUM-10 in the embodiment is calculated to be 0.14094.

[ Embodiment 2] The analytical method in the invention is applied to transient DCPR calculation for a reactor core that has 40% power/50% flux, feedwater control failure and no bypass.

The flow process and Step a are the same as those in Embodiment 1.

Step b: Transient simulation follows standard inspection process NRUG-0800 and conditions based on supplier's conservative assumption are entered into the basic mode in RETRAN system. The assumptions for feedwater failure and no bypass are as follows:

- Neutron analysis and calculation uses Licensing Base to consume until the End of Cycle (EOC). For power distribution, peak power is at the top of reactor core.
- Stop valve shuts off within 0.1 second.
- During transient period, feedwater temperature is constant.
- When the steam top tank pressure reaches 1095.7 psia, it takes 0.07 second of delay for reactor protection system to immediately shut down the reactor.
- When neutron flux reaches 122%, it takes 0.11 second (0.07 second of delay for reactor protection system, 0.04 second of signal detection) of delay to immediately shut down the reactor.
- Re-circulation pump fails to shut off.
- Control rod system has 0.1 second delay from emergency stop signal to actual start.
- Control rod is inserted at constant insertion speed. It takes 2.147 seconds for complete insertion (including 0.1 second of delay).
- Steam bypass valve does not open.
- The delay for opening steam relief valve is 0.4 second. It is 0.15 second from full openness to full closure.
- Signal reset time for steam relief valve is 0.4 second. It is 0.15 second from full openness to full closure.

Step c: Use single fuel bundle RETRAN mode to establish the relationship between fuel bundle power ratio and the inlet flux under such analytical condition. The detailed procedure at least includes:

41. Use single fuel bundle RETRAN mode as basis. Under the operation condition 40% power/50% flux, use supplier's pressure distribution data to adjust RETRAN single fuel bundle mode, so the two have the consistent pressure at nodes and fixed flow resistance coefficient.

42. Use the single fuel bundle mode after adjustment of flow resistance coefficient as basis, change the flux corresponding to the recorded fuel bundle power, as shown in Figure 8.

Step d: Use Fortran language to write interface and data processing program AutoDCPR. The flow diagram for programming is shown in Figure 3. AutoDCPR program will automatically execute the following steps:

51. Read transient hot water parameters from RETRAN system mode, such as inlet temperature, inlet pressure, outlet pressure and axial power as boundary conditions for single fuel bundle hot channel model.

52. Calculate transient MCPR for a single channel RETRAN mode.

53. Follow the method described in Step d to adjust the power for single channel RETRAN mode.

54. Re-calculate transient MCPR for a single channel RETRAN mode. Repeat until the minimum transient MCPR equals 1.

55. Record the transient initial MCPR. After subtracting the minimum transient MCPR (1.0), it becomes the DCPR for the present transient event.

Through the above method to search for possible transient events, fuel operation needs the minimum MCPR value, i.e. the plant operated at 40% power /50% flux maintains reactor core MCPR higher than DCPR+1.0 to assure feedwater failure and no bypass. It is impossible for MCPR lower than 1.0 and for transient boiling situation, which would increase fuel protector temperature and break it, and then make radioactive fission products released into cooling water system.

The DCPR for the fuel bundle ATRIUM-10 in the embodiment is calculated to be 0.44971.

In summary, the analytical method in the invention for transient event in a boiling water reactor can effectively improve the drawbacks with the original method. This will include:

1. Use RETRAN to establish a single fuel hot channel model to calculate fuel initial flux and save calculation time as well as accurately predict transient initial hot channel flux.

2. It can accurately and conservatively calculate transient DCPR and determine operation limit value. Further it uses automatic program to conduct transient safety analysis to assure the safety for reactor core. Because the invention is progressive, practical and satisfactory to user's needs, it meets patent requirements and the application is thus submitted.

The above mentioned is only preferred embodiment for the invention, but not to limit the scope of the invention. Those equivalent modifications to the description in the invention shall all be covered by the scope of the invention.

**Claims**

1. A transient analytical method for the thermal limit in a boiling water reactor at least comprises the following steps:

a. Collect accurate geometric data and use RETRAN program to establish system analytical mode;
b. Follow power plant's geometric data and control logics to establish RETRAN power plant system mode, simulate hot water variation and conduct validation by starting up the operation;
c. Introduce the conservative assumptions on transient thermal limit to the basic RETRAN system mode;
d. Under the specific plant power/ flux condition, follow supplier's pressure distribution to adjust flow resistance coefficient, change fuel bundle power and record flux at each power;
e. Calculate the transient DCPR value, which is the analytical result for the transient thermal limit.

2. As described in claim 1 for a transient analytical method for thermal limit in a boiling water reactor, Step a refers to a single fuel bundle RETRAN analytical mode.

3. As described in claim 1 for a transient analytical method for thermal limit in a boiling water reactor, it also includes the basic mode for RETRAN thermal limit analysis.

4. As described in claim 1 for a transient analytical method for thermal limit in a boiling water reactor, the individual transient conservative assumption includes the selection method to introduce analytical mode and the simulation method for RETRAN system analytical mode.

5. As described in claim 1 for a transient analytical method for thermal limit in a boiling water reactor, it also contains another RETRAN single fuel bundle mode to determine the inlet initial flux for fuel bundle at different power.

6. As described in claim 1 for a transient analytical method for thermal limit in a boiling water reactor, the transient DCPR calculation method includes the following steps:

a) Read transient hot water parameters from RETRAN system mode, such as inlet temperature, inlet pressure, outlet pressure and axial power as boundary conditions for single fuel bundle hot channel model;
b) Calculate transient MCPR for a single channel RETRAN mode;
c) Adjust the power for single channel RETRAN mode;
If transient minimum CPR value has not reached 1.0,
use the following criteria $10^{-4}$ to determine convergence:

$$\left| \, Min\,[CPR(t)] - 1.0 \, \right| \leqq 1.0 \times 10^{-4}$$

If no convergence, adjust the power for hot channel model until CPR minimum value reaches 1.0, the adjustment is as follows:

$$RPF_{\text{new}} = RPF_{old} \times \{1 + 0.8 \times (Min\ [CPR(t)] - 1)\}$$

d) Re-calculate transient MCPR for single channel RETRAN mode; Repeat step 3) until transient minimum MCPR equals to 1.0;

e) Record the transient initial MCPR, which then subtracts transient minimum MCPR (1.0) to obtain the transient DCPR.

Set up single fuel bundle model with Retran program, and use fuel supplier's data to adjust the flow resistance coefficient, so the pressure drop will be consistent with the calculated results.    A

Change thermal power on thermal channel model, and use flow split model to calculate the flow rate at different power.    B

Use thermal channel initial flow at a specific radial power and the transient hot water flow parameters calculated by RETRAN system model as boundary conditions. Use single fuel bundle thermal channel model to calculate variation of critical power ratio (CPR). If transient minimum CPR is less than 1.0, proceed with the following iteration.    C

Adjust (increase) the power for single fuel bundle thermal channel model. Obtain new thermal channel initial flow rate at a specific radial power. Similarly as above, use the transient hot water flow parameters variation calculated by RETRAN system model as boundary conditions. Calculate the maximum Delta CPR (DCPR) for transient minimum CPR until transient minimum CPR approaches 1.0.    D

Record the DCPR when transient CPR approaches 1.0. Seek the maximum Delta CPR (initial CPR less 1.0). Such value is the DCPR for this transient analysis.    E

It needs to find out all possible transient process for CPR decrease in the safety calculation for loading core fuel. Follow the previous procedures to calculate transient DCPR and find out the maximum DCPR in all transient analysis. This is the $DCPR_{MAX}$ in the cycle.    F

FIG. 1

# TITRAM Methodology

| Plant Specific Model(Input) | Code Calculation | Library/Data/Output |
|---|---|---|
| **Nautronic Data Preperation** | | |
| BWRHB Input | BWRHB | BWRHB Library File |
| | | BWRHB Output File |
| SIMULATE-3 Input | SIMULATE-3 | Restart File Library |
| | | Output File |
| SLICK Input | SLICK | Kinetics File |
| **System Transient Analysis** | | |
| RETRAN-3D Input Chinshan,Kuosheng Models | RETRAN-3D | One-D Kinetics Data File (TAPE40) |
| **AUTODCPR Calculation** | | |
| RETRAN-3D Hot Channel Model ATRIUM-9B,ATRIUM-10 | RETRAN-3D | Transient Boundary Condition |
| SPCB Program Input | SPCB Correlation Program | Calculated heat flux,flow |
| adjust RPF | No ← MCPR=1 | |
| | Yes | |
| | ΔCPR | |

F I G. 2

Start

Set up transient
calculation model
under RETRAN
system model

Transient calculation
under RETRAN
system model

Core one-dimension
neutron
Cross-section data file

From SIMULATE, SLICK

Transient variation
$T_{in}$, $P_{in}$, $P_{out}$, radial
power distribution

RETRAN single fuel
bundle thermal
channel model

Initial thermal
channel power or
adjusted thermal
channel power

Calculation of transient hot
water flow parameters under
RETRAN thermal channel
model

Transient thermal flow
parameter
(Inlet enthalpy)
(Pressure at each node)
(Flow rate at each node)
(Thermal flux at each
node)

MCPR correlation
transient
MCPR calculation at
each node

Transient minimum
MCPR approaches
1.0

Adjusted thermal
channel power

Record transient DCPR
result

Calculation ends

F I G . 3

F I G . 4

F I G . 5

F I G . 6

F I G . 7

F I G . 8

**European Patent Office**

**EUROPEAN SEARCH REPORT**

Application Number

EP 08 10 0001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 221 701 A (GLOBAL NUCLEAR FUEL AMERICAS L [US]) 10 July 2002 (2002-07-10) * page 2, paragraph 1 * * page 9, paragraph 35 * ----- | 1-6 | INV. G21C17/00 G21D3/04 |
| X | US 5 912 933 A (SHAUG JAMES C [US] ET AL) 15 June 1999 (1999-06-15) * column 1, line 7 - line 12 * * column 6, line 55 - line 61 * ----- | 1-6 | |
| X | EP 1 804 255 A (GLOBAL NUCLEAR FUEL AMERICAS L [US]) 4 July 2007 (2007-07-04) * page 1, paragraph 1 - paragraph 2 * * page 2, paragraph 14 * ----- | 1-6 | |
| X | US 5 171 516 A (IWAMOTO TATSUYA [JP]) 15 December 1992 (1992-12-15) * column 1, line 7 - line 10 * * column 5, line 42 - line 57 * ----- | 1-6 | |

TECHNICAL FIELDS SEARCHED (IPC)

G21C
G21D

The present search report has been drawn up for all claims

| Place of search | Date of completion of the search | Examiner |
|---|---|---|
| Munich | 16 June 2008 | Zanotti, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 10 0001

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2008

| Patent document cited in search report | | Publication date | Patent family member(s) | | Publication date |
|---|---|---|---|---|---|
| EP 1221701 | A | 10-07-2002 | JP | 3704086 B2 | 05-10-2005 |
| | | | JP | 2002257973 A | 11-09-2002 |
| | | | TW | 557449 B | 11-10-2003 |
| | | | US | 2003002613 A1 | 02-01-2003 |
| | | | US | 2002122521 A1 | 05-09-2002 |
| US 5912933 | A | 15-06-1999 | NONE | | |
| EP 1804255 | A | 04-07-2007 | CN | 101034595 A | 12-09-2007 |
| | | | JP | 2007183268 A | 19-07-2007 |
| | | | KR | 20070072399 A | 04-07-2007 |
| | | | US | 2007153958 A1 | 05-07-2007 |
| US 5171516 | A | 15-12-1992 | JP | 3224810 B2 | 05-11-2001 |
| | | | JP | 4142498 A | 15-05-1992 |

EPO FORM P0459

For more details about this annex : see Official Journal of the European Patent Office, No. 12/82